(19) Europäisches Patentamt
European Patent Office
Office européen des brevets

(11) Veröffentlichungsnummer : **0 359 145 B1**

(12) **EUROPÄISCHE PATENTSCHRIFT**

(45) Veröffentlichungstag der Patentschrift : **27.12.91 Patentblatt 91/52**

(21) Anmeldenummer : **89116646.4**

(22) Anmeldetag : **08.09.89**

(51) Int. Cl.$^5$ : **C10M 173/02,**
// (C10M173/02, 129:32, 129:40, 135:20, 137:06), C10N40:00

(54) **Klarwasserlösliche seifenfreie Schmiermittelzubereitung.**

(30) Priorität : **16.09.88 DE 3831448**

(43) Veröffentlichungstag der Anmeldung : **21.03.90 Patentblatt 90/12**

(45) Bekanntmachung des Hinweises auf die Patenterteilung : **27.12.91 Patentblatt 91/52**

(84) Benannte Vertragsstaaten : **AT BE CH DE ES FR GB GR IT LI NL SE**

(56) Entgegenhaltungen :
**EP-A- 0 137 057**
**DE-A- 2 313 330**
**DE-A- 2 434 669**

(73) Patentinhaber : **Henkel Kommanditgesellschaft auf Aktien**
**Henkelstrasse 67**
**W-4000 Düsseldorf 13 (DE)**

(72) Erfinder : **Scharf, Rolf**
**Knipprather Strasse 27**
**W-4019 Monheim (DE)**
Erfinder : **Schmitz, Karl-Heinz**
**Hügelstrasse 40**
**W-4000 Düsseldorf 13 (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine wäßrige, klarwasserlösliche seifenfreie Schmiermittelzubereitung, ein Verfahren zu ihrer Herstellung und die Verwendung als Förderanlagenschmiermittel. Die erfindungsgemäßen Schmiermittelzubereitungen sind in verdünnter wäßriger Form von der Wasserhärte unabhängig in automatischen Förderanlagen-Schmiersystemen für Glas- und Kunststoffflaschen, Dosen, Gläser, Fässer, Pappverpackungen und dergleichen einsetzbar.

In Flaschen- und Faßkellern von Getränkebetrieben sowie bei der Abfüllung von Lebensmitteln werden für den Transport der entsprechenden Gefäße üblicherweise Plattentransportbänder oder andere Förderanlagen benutzt, die mit geeigneten wäßrigen Schmiermittelzubereitungen, vorzugsweise über automatische Bandschmieranlagen, mit Sprühsystemen geschmiert und sauber gehalten werden.

Üblicherweise werden hierfür Schmiermittelzubereitungen auf Seifenbasis eingesetzt.

Die DE-OS 2313330 beschreibt Schmiermittel auf Seifenbasis, die wäßrige Mischungen mit Fettsäuresalzen und oberflächenaktiven Substanzen enthalten. Nachteile derartiger Schmiermittelzubereitungen auf Seifenbasis sind :

1. Die Schmiermittelzubereitungen müssen zur Komplexierung der Wasserhärte entsprechende Ethylendiaminotetraessigsäure- oder Nitrilotriacetat-Mengen enthalten. Hierdurch wird die Kalkseifenbidlung vermieden, die ein Verstopfen der Düsen des automatischen Schmiersystems zur Folge hätte.
2. Hohe Wasserhärten bedingen hohe Komplexierungsmittel-Mengen in den Schmiermittelzubereitungen, wodurch zwangsläufig der Seifenanteil im fertigen Produkt reduziert werden muß. Dies vermindert jedoch die Schmierwirkung der Zubereitung.
3. Schmiermittelzubereitungen auf Seifenbasis schäumen relativ stark, da die gebildeten Seifen sehr schwer zu entschäumen sind. Überschäumendes Schmiermittel geht bei der Schmierung von Flaschentransportbändern verloren und kann in die zu transportierenden Gefäße gelangen. Außerdem stört die Schaumentwicklung auf den Flaschentransportbändern die automatische Leerflaschenkontrolle.
4. Die Verwendung von enthärtetem Wasser zur Vermeidung von Kalkseifenbildung bei Produkten ohne oder mit nur geringem Komplexierungsmittel-Zusatz verteuert die Anwendung derartiger Produkte. Bei Kationen-Austauschern sind Härtedurchbrüche in der Praxis keine Seltenheit. Zudem besteht bei den Ionenaustauschern auch die Gefahr der Verkeimung, wenn sie nicht in gewissen Zeitabständen desinfiziert werden. Mit Mikroorganismen kontaminierte Schmiermittelzubereitungen können dann die Folge sein, was wiederum zu einer Kontaminierung des Inneren der zu transportierenden Gefäße und letztlich zum Verderb des Getränks oder Lebensmittels führen kann.

In der DE-OS 3631953 wird ein Verfahren zur Pflege von kettenförmigen Flaschentransportbändern in Getränkeabfüllbetrieben, insbesondere in Brauereien, beschrieben. Dabei werden die kettenförmigen Flaschentransportbänder mit Bandschmiermitteln auf der Basis neutralisierter Fettamine geschmiert und mit kationischen Reinigungsmitteln oder organischen Säuren gereinigt. Die Erfindung ermöglicht einen ungestörten kontinuierlichen Flaschentransportbetrieb.

In der EP-PS 0044458 werden Schmiermittelzubereitungen beschrieben, die praktisch frei von Fettsäureseife sind und die weiterhin ein carboxyliertes nichtionisches Tensid und ein Acyl-Sarcosinat enthalten. Der pH-Wert der in der EP-PS 0044458 beschriebenen Produkte beträgt 7 bis 11 und liegt somit vorzugsweise im neutralen bis alkalischen Bereich.

Demgegenüber ist Aufgabe der vorliegenden Erfindung eine neue Schmiermittelzubereitung zur Verfügung zu stellen, die auf der Basis anionischer Tenside hergestellt wird. Weitere Aufgabe der vorliegenden Erfindung ist eine Schmiermittelzubereitung, die für die Anwendung auf Flaschentransportbändern geeignet ist. Insbesondere besteht die Aufgabe der vorliegenden Erfindung darin, eine Schmiermittelzubereitung zur Verfügung zu stellen, die bei der Verwendung von Polyethylenterephthalat-Flaschen geeignet ist, da die bekannten Schmiermittelzubereitungen, insbesondere auf Seifenbasis, bei der längeren Einwirkung auf Polyethylenterephthalat-Flaschen Spannungsrißkorrosion bewirken. Demgemäß besteht eine weitere Aufgabe der vorliegenden Erfindung darin, eine Schmiermittelzubereitung zur Verfügung zu stellen, die insbesondere bei Polyethylenterephthalat-Flaschen keine Spannungskorrosion bewirkt.

Die Erfindung betrifft demgemäß wäßrige, klarwasserlösliche seifenfreie Schmiermittelzubereitungen auf der Basis anionischer Tenside aus Alkylbenzolsulfonaten, alkoxylierten Alkanolphosphaten und Alkancarbonsäuren, die wenigstens gleich gute Schmiereffekte wie seifenhaltige Schmiermittelzubereitungen oder Schmiermittelzubereitungen auf der Basis nichtionischer Tenside aufweisen, ohne jedoch deren Nachteile zu beinhalten.

Demgemäß ist ein Gegenstand der vorliegenden Erfindung gerichtet auf wäßrige, klarwasserlösliche seifenfreie Schmiermittelzubereitungen mit einem pH-Wert im Bereich von 6 bis 8, enthaltend

(a) Alkylbenzolsulfonate mit einer Kettenlänge von 10 bis 18 C-Atomen im Alkylrest in Form von Alkalimetallsalzen, Ammoniumsalzen sowie Alkanolaminsalzen mit 1 bis 14 C-Atomen im Alkanolaminrest,

(b) alkoxylierte Alkanolphosphate der allgemeinen Formel (I)

$$R^1-O-(-CH_2-\underset{\displaystyle R^2}{\underset{|}{CH}}-O)_n-PO_3X_2 \qquad (I)$$

wobei

- $R^1$ für einen geradkettigen und/oder verzweigtkettigen, gesättigten oder einfach und/oder mehrfach ungesättigten Alkylrest mit 12 bis 18 C-Atomen
- $R^2$ für H oder $CH_3$,
- X für Wasserstoff und/oder ein Alkalimetall und
- n für eine ganze Zahl im Bereich von 8 bis 12 steht und

(c) geradkettige und/oder verzweigtkettige, gesättigte und/oder einfach und/oder mehrfach ungesättigte Alkancarbonsäuren mit 6 bis 22 C-Atomen und einem Titer von weniger oder gleich 20°C, wobei Alkylbenzolsulfonate und Alkanolphosphate im Gewichts verhältnis von 3 : 1 bis 1 : 3 vorliegen, Alkancarbonsäuren zur Summe aus Alkylbenzolsulfonat und Alkanolphosphat im Gewichtsverhältnis von 1 : 20 bis 1 : 4 vorliegen, gegebenenfalls neben üblichen Lösungsvermittlern, Lösungsmitteln, Entschäumungsmitteln und/oder Desinfektionsmitteln.

Die erfindungsgemäß positive Schmierwirkung der klarwasserlöslichen wäßrigen Schmiermittelzubereitungen ist auf die gemeinsame Verwendung von Alkylbenzolsulfonaten und alkoxylierten Alkanolphosphaten neben Alkancarbonsäuren zurückzuführen. Bei der Verwendung von Alkylbenzolsulfonat und Alkanolphosphaten ohne die Anwesenheit von Alkanolcarbonsäuren ist die Schmierwirkung nicht ausreichend.

Die erfindungsgemäßen wäßrigen Schmiermittelzubereitungen enthalten die Komponente a (Alkylbenzolsulfonate) in Mengen von 0,02 bis 15 Gew.-%, die Komponente b (alkoxylierte Alkanolphosphate) in Mengen von 0,02 bis 15 Gew.-% und die Komponente c (Alkancarbonsäuren) in Mengen von 0,01 bis 10 Gew.-%, jeweils bezogen auf die Gesamtzusammensetzung. Im Hinblick auf die Mengen der einzelnen Komponenten in den erfindungsgemäßen Zubereitungen sind jedoch die vorstehend angegebenen Verhältnisse der einzelnen Komponenten zueinander zu beachten. Bevorzugt im Sinne der Erfindung sind die folgenden Mengenbereiche der Komponenten : Komponente a : 6 bis 12 Gew.-% ; Komponente b : 5 bis 10 Gew.-% ; Komponente c : 1 bis 5 Gew.-%.

Die Auswahl der Alkylbenzolsulfonate, alkoxylierten Alkanolphosphate und Alkancarbonsäuren richtet sich im wesentlichen danach, daß diese wasserklare Lösungen bei Raumtemperatur (20°C) bilden. Der Begriff "Titer" im Sinne der vorliegenden Erfindung steht für die bei Fettanalysen verwendete Bezeichnung für den Erstarrungspunkt eines Fettes oder fetten Öles. Alkancarbonsäuren, d.h. insbesondere Fettsäuren mit einem Erstarrungspunkt von mehr als 20°C sind für den Gegenstand der vorliegenden Erfindung weniger geeignet, da deren Verwendung keine klarwasserlöslichen Schmiermittelzubereitungen ergibt.

Die erfindungsgemäßen wäßrigen, klarwasserlöslichen, seifenfreien Schmiermittelzubereitungen kommen üblicherweise nicht als Konzentrat zu Anwendung sondern werden als verdünnte wäßrige Lösung zum Schmieren von Flaschentransportbändern verwendet. Die erfindungsgemäßen Schmiermittelzubereitungen lassen sich nach der Anwendung praktisch rückstandsfrei von den Transportbändern abspülen. Bei der Anwendung im neutralen Bereich werden somit keine Kalkseifen gebildet.

Gemäß einer bevorzugten Ausführungsform der vorliegenden Erfindung sind Schmiermittelzubereitungen dadurch gekennzeichnet, daß die Alkylbenzolsulfonate ausgewählt sind aus Decylbenzolsulfonat und/oder Dodecylbenzolsulfonat. Es ist wesentlicher Bestandteil der vorliegenden Erfindung, daß die Alkylbenzolsulfonate für sich genommen auch eine gewisse Schmierwirkung aufweisen. Beispielsweise sind kurzkettige Alkylsulfonate im Sinne der vorliegenden Erfindung nicht geeignet, wenn die Schmierwirkung nicht ausreichend ist.

Eine weitere Ausführungsform der vorliegenden Erfindung besteht darin, daß in den Schmiermittelzubereitungen der Rest $R^1$ der allgemeinen Formel (I) für den Alkylrest von nativen und/oder synthetischen Fettalkoholen steht, die ausgewählt sind aus Dodecanol, Tridecanol, Tetradecanol, Pentadecanol, Hexadecanol, Heptadecanol, Octadecanol, 2-Butyl-octanol, 2-Pentyl-nonanol, 2-Hexyl-decanol, 2-Heptyl-undecanol, 9c-Octadecen-1-ol und/oder 9c,12c-Octadecadien-1-ol. Der Rest $R^2$ in der allgemeinen Formel (I) steht für Wasserstoff und/oder einen Methylrest. Demgemäß werden die erfindungsgemäß einzusetzenden alkoxylierten

Alkanolphosphate vorzugsweise aus Alkanolen, insbesondere Fettalkoholen und Ethylenoxid und/oder Propylenoxid, beinachfolgender Phosphatierung hergestellt.

Gemäß einer weiteren Ausführungsform der vorliegenden Erfindung werden die alkoxylierten Alkanolphosphate als Kalium- und/oder Natriumsalze eingesetzt. In diesem Fall steht der Rest X in der allgemeinen Formel (I) für Kalium und/oder Natrium. Bei der Verwendung der erfindungsgemäßen Schmiermittelzubereitungen im wesentlichen im neutralen Bereich ist daher nicht mit der Bildung von Kalkseifen zu rechnen.

Ein weiterer wesentlicher, unabdingbarer Bestandteil der Schmiermittelzubereitungen ist die Anwesenheit von Alkancarbonsäuren, die ausgewählt sind aus nativen und/oder synthetischen Carbonsäuren. Dementsprechend können neben synthetisch hergestellten Carbonsäuren auch native Fettsäuren eingesetzt werden. Diese kommen üblicherweise nicht in Reinform vor, sondern werden auch im Sinne der vorliegenden Erfindung vorzugsweise als Gemische eingesetzt, die aus den verschiedensten nativen Quellen stammen können. Demgemäß sind die Alkancarbonsäuren insgesamt vorzugsweise aus Hexansäure, Heptansäure, Octansäure, Nonansäure, 9c-Hexadecensäure, 9c,12c-Octadecadiensäure, 9c,12c,15c-Octadecatriensäure, 5,8,11,14-Eicosatetraensäure, 4,8,12,15,19-Docosapentaensäure, Spermöl-Fettsäure, Kokosöl-Fettsäure, Sonnenblumenöl-Fettsäure, Leinöl-Fettsäure und/oder Rüböl-Fettsäure ausgewählt. Prinzipiell sind somit Carbonsäuren für die erfindungsgemäßen Schmiermittelzubereitungen geeignet, wenn diese einen Titer von weniger oder gleich 20°C aufweisen.

Gegebenenfalls können in den Schmiermittelzubereitungen auch Lösungsvermittler, Entschäumungsmittel und Desinfektionsmittel enthalten sein. Gemäß einer Ausführungsform der vorliegenden Erfindung ist es somit bevorzugt, als Lösungsvermittler mit Wasser mischbare oder in Wasser lösliche Lösungsvermittler einzusetzen. Insbesondere bevorzugt als Lösungsvermittler ist daher die Verwendung von Harnstoff, Ethanol, n-Propanol, i-Propanol, n-Butanol, Ethylenglykol und/oder Butyldiglykol in einer Menge von 50 bis 100 Gew.-Teile eines oder mehrerer dieser Lösungsvermittler, bezogen auf 100 Gew.-Teile der Gesamtmenge an Alkylbenzolsulfonat, alkoxyliertem Alkanolphosphat und Alkancarbonsäure. Derartige Lösungsvermittler oder auch Lösungsmittel werden eingesetzt, um homogene klarwasserlösliche Schmiermittelzubereitungen herzustellen. Im Sinne der vorliegenden Erfindung geeignet sind derartige Lösungsvermittler dann, wenn die Schmierwirkung der Schmiermittelzubereitungen nicht vermindert ist.

Gegebenenfalls können erfindungsgemäße Schmiermittelzubereitungen Entschäumungsmittel in einer Menge von 5 bis 25 Gew.-Teile, bezogen auf 100 Gew.-Teile der Gesamtmenge an Alkylbenzolsulfonat, alkoxyliertem Alkanolphosphat und Alkancarbonsäuren enthalten. Während prinzipiell im Stand der Technik bekannte Entschäumungsmittel eingesetzt werden können, ist es gemäß einer Ausführungsform der vorliegenden Erfindung bevorzugt, als Entschäumungsmittel Triisobutylphosphat in den obengenannten Mengen zu verwenden. Triisobutylphosphat hat den besonderen Vorteil, daß die Schmierwirkung der Schmiermittelzubereitung unterstützt wird.

Desinfektionsmittel, die in den erfindungsgemäßen Schmiermittelzubereitungen enthalten sein können, sind beispielsweise in Ullmanns Encyklopädie der technischen Chemie, 4. Auflage, Band 7 S. 41-58, beschrieben. Erfindungsgemäß bevorzugt werden Desinfektionsmittel dann eingesetzt, wenn die Verkeimung der Vorratsbehälter oder der Transportbänder zu befürchten ist. Demgemäß besteht eine besondere Ausführungsform der erfindungsgemäßen Schmiermittelzubereitungen darin, daß als Desinfektionsmittel Glutaraldehyd, 5-Chlor-2-methyl-4-isothiazolin-3-oxy, 2-Methyl-4-isothiazolin-3-oxy und Natrium-pyridin-thiol-1-oxid sowie deren Gemische in Mengen von 5 bis 50 Gew.-Teilen, bezogen auf 100 Gew.-Teile der Gesamtmenge an Alkylbenzolsulfonat, alkoxyliertem Alkanolphosphat und Alkancarbonsäuren, eingesetzt werden.

Prizipiell ist es für die Verwendung der erfindungsgemäßen Schmiermittelzubereitungen erforderlich, daß diese eine Viskosität von weniger als 300 mPas aufweisen, damit diese mit handelsüblichen Pumpen exakt dosiert werden können. Bei einer Überschreitung dieses Viskositätswertes ist es nicht immer gewährleistet, daß übliche Dosierpumpen die zu verwendenden Mengen reproduzierbar und gleichmäßig dosieren können. Demgemäß werden erfindungsgemäße klarwasserlösliche seifenfreie Schmiermittelzubereitungen dadurch hergestellt, daß man die Wasssermenge und die gegebenenfalls enthaltene Menge an Lösevermittler derart einstellt, daß eine Viskosität der Schmiermittelzubereitung von weniger als 300 mPas erhalten wird. Die Gewichtsverhältnisse von Lösevermittler zu Wasser sind insoweit beliebig variabel, als ein klarwasserlösliches seifenfreies Schmiermittelprodukt entsteht.

Die erfindungsgemäßen wäßrigen, klarwasserlöslichen, seifenfreien Schmiermittelzubereitungen werden üblicherweise nicht als Konzentrat sondern in stark verdünnter wäßriger Lösung verwendet. Demgemäß besteht eine Ausführungsform der vorliegenden Erfindung darin, klarwasserlösliche seifenfreie Schmiermittelzubereitungen — auf Produkt bezogen — in Form von 0,2 bis 1 Gew.-%igen wäßrigen Lösungen als Förderanlagen-Schmiermittel zu verwenden. Die Angabe in Gewichtsprozent ist dahingehend zu verstehen, daß die zu verwendenden Schmiermittellösungen 0,04 bis 0,2 Gew.-% an Alkylbenzolsulfonat, alkoxyliertes Alkanolphosphat und Alkancarbonsäure neben Lösungsvermittlern, Lösungsmitteln, Entschäumungshilfen und/oder

Desinfektionsmitteln enthalten. Vorzugsweise wird die erfindungsgemäße Schmiermittelzubereitung in Form einer 0,5 gew.-%igen wäßrigen Lösung als Förderanlagen-Schmiermittel eingesetzt.

Eine besondere Ausführungsform der vorliegenden Erfindung besteht darin, daß man die klarwasserlöslichen, wäßrigen, seifenfreien Schmiermittelzubereitungen für den Transport von Glasflaschen und/oder Polyethylenterephthalat-Flaschen mittels Förderanlagen verwendet.

Beispiele

Die Versuche zur Messung des Reibungswiderstandes sind auf einem Technikums-Flaschentransportband unter folgenden Bedingungen durchgeführt worden :

Messung des Reibungswiderstandes von 20 mit Wasser gefüllten 0,5 l-Euro-Bierflaschen als Zugspannung mit einem Dynamometer.

Flaschentransportgeschwindigkeit ca. 1 m/sec.

Besprühen des Flaschentransportbandes mit 0,5 %iger Bandschmiermittellösung.

Taktzeiten : 20 sec sprühen/20 sec Pause

Sprühleistung der Düse : 5 l/h

$$\text{Reibwert } \mu = \frac{F_R}{F_N}$$

$F_R$ = gemessene Zugspannung für 1 Flasche

$F_N$ = Gewicht der Flasche in Gramm

Schaumverhalten auf Flaschentransportband :

0 = kein Schaum

1 = vereinzelte Schaumbläschen

2 = wenig Schaum, nicht störend

3 = Schaumentwicklung, störend

4 = starke Schaumentwicklung (Schaumberge unter dem Band)

Die Bestimmung des Schaumvermögens wurde nach DIN 53902 durchgeführt. Hierbei wird durch Schlagen der Lösungen in einem Standzylinder mit einer an einem Stiel befestigten gelochten Platte Schaum erzeugt. Das Verhalten wurde in 16°d-Wasser durchgeführt. Es wurden 0,5 gew.-%ige Schmiermittelzubereitungen verwendet. Nach 20 Schlägen wurde das Schaumvolumen in ml bestimmt.

Beispiel 1

Eine Schmiermittelzubereitung enthaltend

9% Fettalkohol $C_{12-18}$-10-ethylenoxidphosphat,

7% Dodecylbenzolsulfonat,

2% Triisobutylphosphat,

10% Harnstoff,

3% Sonnenblumenöl-Fettsäure,

10% i-Propanol und

59% Wasser

wurde in Form einer 0,5 gew.-%igen wäßrigen Lösung als Schmiermittel für ein Flaschentransportband wie oben beschrieben eingesetzt.

Es ergab sich ein Reibwert von 0,06. Beim Schaumverhalten auf dem Band ergab sich die Note 1.

Das Schaumvolumen in der Schaumschlagapparatur betrug 200 ml.

Beispiel 2

Eine Schmiermittelzubereitung enthaltend

9% Fettalkohol $C_{12-18}$-10-ethylenoxidphosphat,

7% Dodecylbenzolsulfonat,

2% Triisobutylphosphat,

10% Harnstoff,
1% Sonnenblumenöl-Fettsäure
10% i-Propanol und
61% Wasser
wurde in Form einer 0,5 gew.-%igen wäßrigen Lösung als Schmiermittel für ein Flaschentransportband wie oben beschrieben eingesetzt.

Es ergab sich ein Reibwert von 0,100. Beim Schaumverhalten auf dem Band ergab sich die Note 1. Das Schaumvolumen in der Schaumschlagapparatur betrug 280 ml.

Beispiel 3

Eine Schmiermittelzubereitung enthaltend
9% Fettalkohol $C_{12-18}$-10-ethylenoxidphosphat,
7% Dodecylbenzolsulfonat,
2% Triisobutylphosphat,
10% Harnstoff,
2% Sonnenblumenöl-Fettsäure
10% i-Propanol und
60% Wasser
wurde in Form einer 0,5 gew.-%igen wäßrigen Lösung als Schmiermittel für ein Flaschentransportband wie oben beschrieben eingesetzt.

Es ergab sich ein Reibwert von 0,08. Beim Schaumverhalten auf dem Band ergab sich die Note 1. Das Schaumvolumen in der Schaumschlagapparatur betrug 240 ml.

Beispiel 4

Eine Schmiermittelzubereitung enthaltend
9% Fettalkohol $C_{12-18}$-10-ethylenoxidphosphat,
7% Dodecylbenzolsulfonat,
2% Triisobutylphosphat,
10% Harnstoff,
4% Sonnenblumenöl-Fettsäure
10% i-Propanol und
58% Wasser
wurde in Form einer 0,5 gew.-%igen wäßrigen Lösung als Schmiermittel für ein Flaschentransportband wie oben beschrieben eingesetzt.

Es ergab sich ein Reibwert von 0,07. Beim Schaumverhalten auf dem Band ergab sich die Note 1. Das Schaumvolumen in der Schaumschlagapparatur betrug 160 ml.

Beispiel 5

Eine Schmiermittelzubereitung enthaltend
9% Fettalkohol $C_{12-18}$-10-ethylenoxidphosphat,
7% Dodecylbenzolsulfonat,
2% Triisobutylphosphat,
10% Harnstoff,
5% Sonnenblumenöl-Fettsäure
10% i-Propanol und
57% Wasser
wurde in Form einer 0,5 gew.-%igen wäßrigen Lösung als Schmiermittel für ein Flaschentransportband wie oben beschrieben eingesetzt.

Es ergab sich ein Reibwert von 0,07. Beim Schaumverhalten auf dem Band ergab sich die Note 1. Das Schaumvolumen in der Schaumschlagapparatur betrug 120 ml.

Beispiel 6

Eine Schmiermittelzubereitung enthaltend
9% Fettalkohol $C_{12-18}$-10-ethylenoxidphosphat,

7% Dodecylbenzolsulfonat,
4% Glutaraldehyd,
2% Nitrilotriacetat,
3% Sonnenblumenöl-Fettsäure
10% Butyldiglykol und
65% Wasser
wurde in Form einer 0,5 gew.-%igen wäßrigen Lösung als Schmiermittel für ein Flaschentransportband wie oben beschrieben eingesetzt.

Es ergab sich ein Reibwert von 0,09. Beim Schaumverhalten auf dem Band ergab sich die Note 1.

Das Schaumvolumen in der Schaumschlagapparatur betrug 250 ml.

Beispiel 7

Eine Schmiermittelzubereitung enthaltend
9% Fettalkohol $C_{12-18}$-10-ethylenoxidphosphat,
7% Dodecylbenzolsulfonat,
2% Diethylentriaminpentamethylenphosphonat,
10% Harnstoff,
3% fraktionierte Fettsäure mit einer Kettenverteilung von ca. 2% $C_6$, 60% $C_8$, 35% $C_{10}$ und 1% $C_{12}$,
1% Desinfektionsmittel aus 5-Chlor-2-methyl-4-isothiazolin-3-oxy und 2-Methyl-4-isothiazolin-oxy,
3% i-Propanol und
65% Wasser
wurde in Form einer 0,5 gew.-%igen wäßrigen Lösung als Schmiermittel für ein Flaschentransportband wie oben beschrieben eingesetzt.

Es ergab sich ein Reibwert von 0,10. Beim Schaumverhalten auf dem Band ergab sich die Note 2-3.

Das Schaumvolumen in der Schaumschlagapparatur betrug 280 ml.

Beispiel 8

Eine Schmiermittelzubereitung enthaltend
9% Fettalkohol $C_{12-18}$-10-ethylenoxidphosphat,
7% Dodecylbenzolsulfonat,
2% Triisobutylphosphat,
10% Harnstoff,
2,5% Fettsäure mit einer Kettenverteilung von $C_{14-18}$ : 8%/ $C_{18'}$ : 28%/ $C_{18''}$ : 62%/ $C_{18'''}$: 1%/ > $C_{18}$ : 1%
10% i-Propanol und
59,5% Wasser
wurde in Form einer 0,5 gew.-%igen wäßrigen Lösung als Schmiermittel für ein Flaschentransportband wie oben beschrieben eingesetzt.

Es ergab sich ein Reibwert von 0,067. Beim Schaumverhalten auf dem Band ergab sich die Note 2.

Das Schaumvolumen in der Schaumschlagapparatur betrug 260 ml.

Beispiel 9

Eine Schmiermittelzubereitung enthaltend
9% Fettalkohol $C_{12-18}$-10-ethylenoxidphosphat,
7% Dodecylbenzolsulfonat,
2% Triisobutylphosphat,
10% Harnstoff,
3% Fettsäure mit einer Kettenverteilung von 1% $C_6$, 98% $C_8$ und 1% $C_{10}$.
10% i-Propanol und
59% Wasser
wurde in Form einer 0,5 gew.-%igen wäßrigen Lösung als Schmiermittel für ein Flaschentransportband wie oben beschrieben eingesetzt.

Es ergab sich ein Reibwert von 0,068. Beim Schaumverhalten auf dem Band ergab sich die Note 2-3.

Das Schaumvolumen in der Schaumschlagapparatur betrug 320 ml.

Beispiel 10

Eine Schmiermittelzubereitung enthaltend
9% Fettalkohol $C_{12-18}$-10-ethylenoxidphosphat,
7% Dodecylbenzolsulfonat,
2% Triisobutylphosphat,
10% Harnstoff,
3% Fettsäure mit einer Kettenverteilung von ca. 2% $C_6$, 60% $C_8$, 35% $C_{10}$ und 3% $C_{12}$,
10% i-Propanol und
59% Wasser
wurde in Form einer 0,5 gew.-%igen wäßrigen Lösung als Schmiermittel für ein Flaschentransportband wie oben beschrieben eingesetzt.

Es ergab sich ein Reibwert von 0,068. Beim Schaumverhalten auf dem Band ergab sich die Note 2-3.

Das Schaumvolumen in der Schaumschlagapparatur betrug 400 ml.

Vergleichsbeispiel 1

Eine Schmiermittelzubereitung enthaltend
14% Fettsäure mit einer Kettenverteilung von 18% $C_{14-18}$, 25% $C_{18'}$, 48% $C_{18''}$, 7% $C_{18'''}$, 2% > $C_{18}$
4% Kaliumhydroxid,
12% Triethanolamin,
15% Dodecylbenzolsulfonat,
3% Ethylendiamin-30EO-60PO,
1% Oleyl-Cetylalkohol, Jodzahl 80-85, 0-2% $C_{12}$, 2-7% $C_{14}$, 8-15% $C_{16}$, 75-85% $C_{18}$, 0-2% $C_{20}$ mit 2 Mol EO
3% Monoethanolamin,
2% Ethylendiamintetraacetat,
5% i-Propanol und
41% Wasser
wurde in Form einer 0,5 gew.-%igen wäßrigen Lösung als Schmiermittelzubereitung für ein Flaschentransportband wie oben eingesetzt (Seifenprodukt).

Es ergab sich ein Reibwert von 0,11. Beim Schaumverhalten auf dem Band ergab sich die Note 4.

Das Schaumvolumen in der Schaumschlagapparatur betrug 490 ml.

Der 0,5 Gew.-%ige Ansatz der Schmiermittelzubereitung in 16°d Wasser war nicht wasserklar (Ausflockung).

Vergleichsbeipiel 2

Eine Schmiermittelzubereitung enthaltend
21% Fettalkohol $C_{12-18}$-10-ethylenoxidphosphat,
10% Harnstoff,
10% i-Propanol und
59% Wasser
wurde in Form einer 0,5 gew.-%igen wäßrigen Lösung als Schmiermittel für ein Flaschentransportband wie oben eingesetzt.

Es ergab sich ein Reibwert von 0,098. Beim Schaumverhalten auf dem Band ergab sich die Note 1.

Das Schaumvolumen in der Schaumschlagapparatur betrug 300 ml.

Der 0,5 gew.-%ige Ansatz der Schmiermittelzubereitung in 16°d-Wasser war nicht wasserklar (Ausflockung).

Vergleichsbeispiel 3

Eine Schmiermittelzubereitung enthaltend
21% Dodecylbenzolsulfonat,
10% Harnstoff,
10% i-Propanol und
59% Wasser
wurde in Form einer 0,5 gew.-%igen wäßrigen Lösung als Schmiermittel für ein Flaschentransportband wie oben eingesetzt.

Es ergab sich ein Reibwert von 0,137. Beim Schaumverhalten auf dem Band ergab sich die Note 4.

Das Schaumvolumen in der Schaumschlagapparatur betrug 600 ml.

Der 0,5 gew.-%ige Ansatz der Schmiermittelzubereitung in 16°d-Wasser war nicht wasserklar (Ausflockung).

Vergleichsbeispiel 4

Eine Schmiermittelzubereitung enthaltend
12% Fettalkohol $C_{12-18}$-10-ethylenoxidphosphat,
9% Dodecylsulfonate,
10% Harnstoff,
10% i-Propanol und
59% Wasser
wurde in Form einer 0,5 gew.-%igen wäßrigen Lösung als Schmiermittel für ein Flaschentransportband wie oben eingesetzt.

Es ergab sich ein Reibwert von 0,100. Beim Schaumverhalten auf dem Band ergab sich die Note 2.

Das Schaumvolumen in der Schaumschlagapparatur betrug 400 ml.

Der 0,5 gew.-%ige Ansatz der Schmiermittelzubereitung in 16°d-Wasser war nicht wasserklar (Ausflockung).

Vergleichsbeispiel 5

Eine Schmiermittelzubereitung enthaltend
9% Fettalkohol $C_{12-18}$-10-ethylenoxidphosphat,
7% Dodecylbenzolsulfonat,
5% Triisobutylphosphat,
10% Harnstoff,
10% i-Propanol und
59% Wasser
wurde in Form einer 0,5 gew.-%igen wäßrigen Lösung als Schmiermittel für ein Flaschentransportband wie oben eingesetzt.

Es ergab sich ein Reibwert von 0,096. Beim Schaumverhalten auf dem Band ergab sich die Note 1.

Das Schaumvolumen in der Schaumschlagapparatur betrug 350 ml.

**Patentansprüche**

1. Wäßrige, klarwasserlösliche seifenfreie Schmiermittelzubereitung mit einem pH-Wert im Bereich von 6 bis 8, enthaltend

(a) Alkylbenzolsulfonate mit einer Kettenlänge von 10 bis 18 C-Atomen im Alkylrest in Form von Alkalimetallsalzen, Ammoniumsalzen sowie Alkanolaminsalzen mit 1 bis 14 C-Atomen im Alkanolaminrest,

(b) alkoxylierte Alkanolphosphate der allgemeinen Formel (I)

$$R^1-O-(-CH_2-\underset{R^2}{CH}-O)_n-PO_3X_2 \quad (I)$$

wobei

R¹ für einen geradkettigen und/oder verzweigtkettigen, gesättigten oder einfach und/oder mehrfach ungesättigten Alkylrest mit 12 bis 18 C-Atomen

R² für H oder $CH_3$,

X für Wasserstoff und/oder ein Alkalimetall und

n für eine ganze Zahl im Bereich von 8 bis 12 steht und

(c) geradkettige und/oder verzweigtkettige, gesättigte und/oder einfach und/oder mehrfach ungesättigte

Alkancarbonsäuren mit 6 bis 22 C-Atomen und einem Titer von weniger oder gleich 20°C, wobei Alkylbenzolsulfonate und Alkanolphosphate im Gewichtsverhältnis von 3 : 1 bis 1 : 3 vorliegen, Alkancarbonsäuren zur Summe aus Alkylbenzolsulfonat und Alkanolphosphat im Gewichtsverhältnis von 1 : 20 bis 1 : 4 vorliegen, gegebenenfalls neben üblichen Lösungsvermittlern, Lösungsmitteln, Entschäumungsmitteln und/oder Desinfektionsmitteln.

2. Schmiermittelzubereitung nach Anspruch 1, dadurch gekennzeichnet, daß die Alkylbenzolsulfonate ausgewählt sind aus Decylbenzolsulfonat und/oder Dodecylbenzolsulfonat.

3. Schmiermittelzubereitung nach Anspruch 1, dadurch gekennzeichnet, daß der Rest $R^1$ der allgemeinen Formel (I) für den Alkylrest von nativen und/oder synthetischen Fettalkoholen steht, die ausgewählt sind aus Dodecanol, Tridecanol, Tetradecanol, Pentadecanol, Hexadecanol, Heptadecanol, Octadecanol, 2-Butyl-octanol, 2-Pentyl-nonanol, 2-Hexyl-decanol, 2-Heptyl-undecanol, 9c-Octadecen-1-ol und/oder 9c,12c-Octadecadien-1-ol.

4. Schmiermittelzubereitung nach Anspruch 1, dadurch gekennzeichnet, daß in der allgemeinen Formel (I) der Rest X für Kalium und/oder Natrium steht.

5. Schmiermittelzubereitung nach Anspruch 1, dadurch gekennzeichnet, daß die Alkancarbonsäuren ausgewählt sind aus nativen und/oder synthetischen Carbonsäuren, die ausgewählt sind aus Hexansäure, Heptansäure, Octansäure, Nonansäure, 9c-Hectadecensäure, 9c,12c-Octadecadiensäure, 9c,12c,15c-Octadecatriensäure, 5,8,11,14-Eicosatetraensäure, 4,8,12,15,19-Docosapentaensäure, Spermöl-Fettsäure, Kokosöl-Fettsäure, Sonnenblumenöl-Fettsäure, Leinöl-Fettsäure und/oder Rüböl-Fettsäure.

6. Schmiermittelzubereitung nach Ansprüchen 1 bis 5, dadurch gekennzeichnet, daß sie Alkylbenzolsulfonate in Mengen von 0,02 bis 15 Gew.-%, vorzugsweise 6 bis 12 Gew.-%, alkoxylierte Alkanolphosphate der allgemeinen Formel (I) in Mengen von 0,02 bis 15 Gew.-%, vorzugsweise 5 bis 10 Gew.-%, und Alkancarbonsäuren in Mengen von 0,01 bis 10 Gew.-%, vorzugsweise 1 bis 5 Gew.-%, jeweils bezogen auf die Gesamtzusammensetzung, enthält.

7. Schmiermittelzubereitung nach Ansprüchen 1 bis 6, dadurch gekennzeichnet, daß sie eines oder mehrere mit Wasser mischbare oder in Wasser lösliche Lösungsvermittler oder Lösungsmittel enthalten, die ausgewählt sind aus Harnstoff, Ethanol, n-Propanol, i-Propanol, n-Butanol, Ethylenglykol und/oder Butyldiglykol in einer Menge von 50 bis 100 Gew.-Teilen, bezogen auf 100 Gew.-Teile der Gesamtmenge an Alkylbenzolsulfonat, Alkanolphosphat und Alkancarbonsäure.

8. Schmiermittelzubereitung nach Ansprüchen 1 bis 7, dadurch gekennzeichnet, daß sie als Entschäumungsmittel Triisobutylphosphat in einer Menge von 5 bis 25 Gew.-Teilen, bezogen auf 100 Gew.-Teile der Gesamtmenge an Alkylbenzolsulfonat, Alkanolphosphat und Alkancarbonsäure enthalten.

9. Schmiermittelzubereitung nach Ansprüchen 1 bis 8, dadurch gekennzeichnet, daß sie als Desinfektionsmittel Glutaraldehyd, 5-Chlor-2-methyl-4-isothiazolin-3-oxy, 2-Methyl-4-isothiazolin-3-oxy und Natrium-pyridinthiol-1-oxid sowie deren Gemische in einer Menge von 5 bis 50 Gew.-Teilen, bezogen auf 100 Gew.-Teile der Gesamtmenge an Alkylbenzolsulfonat, Alkanolphosphat und Alkancarbonsäuren enthalten.

10. Verfahren zur Herstellung von klarwasserlöslichen seifenfreien Schmiermittelzubereitungen nach Ansprüchen 1 bis 8, dadurch gekennzeichnet, daß man die Wassermenge und die gegebenenfalls enthaltene Menge an Lösungsvermittler und/oder Lösungsmittel derart einstellt, daß eine Viskosität der Schmiermittelzubereitung von weniger als 300 mPas erhalten wird.

11. Verwendung von klarwasserlöslichen seifenfreien Schmiermittelzubereitungen nach Ansprüchen 1 bis 9 in Form einer 0,2 bis 1 gew.-%igen wäßrigen Lösung als Förderanlagen-Schmiermittel.

12. Verwendung nach Anspruch 11 in Form einer 0,5 gew.-%igen wäßrigen Lösung.

13. Verwendung nach Anspruch 11 oder 12 als Förderanlagen-Schmiermittel zum Transport von Glasflaschen und/oder Polyethylenterephthalat-Flaschen.

**Claims**

1. An aqueous, clearly water-soluble, soapless lubricant preparation having a pH value in the range from 6 to 8 and containing

(a) alkyl benzenesulfonates containing 10 to 18 carbon atoms in the alkyl part in the form of alkali metal salts, ammonium salts and alkanolamine salts containing 1 to 14 carbon atoms in the alkanolamine part,

(b) alkoxylated alkanol phosphates corresponding to general formula (I)

$$R^1-O-(-CH_2-\underset{\displaystyle R^2}{\underset{|}{CH}}-O)_n-PO_3X_2 \qquad (I)$$

in which

- $R^1$ is a linear and/or branched, saturated or mono- and/or polyunsaturated alkyl radical containing 12 to 18 carbon atoms,
- $R^2$ represents H or $CH_3$,
- X represents hydrogen and/or an alkali metal and
- n is an integer in the range from 8 to 12 and

(c) linear and/or branched, saturated and/or mono- and/or polyunsaturated alkanecarboxylic acids containing 6 to 22 carbon atoms and having a titer of, or below, 20°C,
alkyl benzenesulfonates and alkanol phosphates being present in a ratio by weight of 3 : 1 to 1 : 3 and alkanecarboxylic acids being present in a ratio by weight to the sum of alkyl benzenesulfonate and alkanol phosphate of from 1 : 20 to 1 : 4, optionally in addition to standard solubilizers, solvents, foam inhibitors and/or disinfectants.

2. A lubricant preparation as claimed in claim 1, characterized in that the alkyl benzenesulfonates are selected from decyl benzenesulfonate and/or dodecyl benzenesulfonate.

3. A lubricant preparation as claimed in claim 1, characterized in that the substituent $R^1$ in general formula (I) is the alkyl radical of native and/or synthetic fatty alcohols selected from dodecanol, tridecanol, tetradecanol, pentadecanol, hexadecanol, heptadecanol, octadecanol, 2-butyl octanol, 2-pentyl nonanol, 2-hexyl decanol, 2-heptyl undecanol, 9c-octadecen-1-ol and/or 9c,12c-octadecadien-1-ol.

4. A lubricant preparation as claimed in claim 1, characterized in that X in general formula (I) is potassium and/or sodium.

5. A lubricant preparation as claimed in claim 1, characterized in that the alkanecarboxylic acids are selected from native and/or synthetic carboxylic acids selected from hexanoic acid, heptanoic acid, octanoic acid, nonanoic acid, 9c-hexadecenoic acid, 9c,12c-octadecadienoic acid, 9c,12c,15c-ocatadecatrienoic acid, 5,8,11,14-eicosatetraenoic acid, 4,8,12,15,19-docosapentaenoic acid, sperm oil fatty acid, coconut oil fatty acid, sunflower oil fatty acid, linseed oil fatty acid and/or rapeseed oil fatty acid.

6. A lubricant preparation as claimed in claims 1 to 5, characterized in that it contains alkyl benzenesulfonates in quantities of 0.02 to 15% by weight and preferably in quantities of 6 to 12% by weight, alkoxylated alkanol phosphates corresponding to general formula (I) in quantities of 0.02 to 15% by weight and preferably in quantities of 5 to 10% by weight and alkanecarboxylic acids in quantities of 0.01 to 10% by weight and preferably in quantities of 1 to 5% by weight, based in each case on the composition as a whole.

7. A lubricant preparation as claimed in claims 1 to 6, characterized in that it contains one or more water-miscible or water-soluble solubilizers or solvents selected from urea, ethanol, n-propanol, i-propanol, n-butanol, ethylene glycol and/or butyl diglycol in a quantity of 50 to 100 parts by weight per 100 parts by weight of the total quantity of alkyl benzenesulfonate, alkanol phosphate and alkanecarboxylic acid.

8. A lubricant preparation as claimed in claims 1 to 7, characterized in that it contains triisobutyl phosphate as foam inhibitor in a quantity of 5 to 25 parts by weight per 100 parts by weight of the total quantity of alkyl benzenesulfonate, alkanol phosphate and alkanecarboxylic acid.

9. A lubricant preparation as claimed in claims 1 to 8, characterized in that it contains glutaraldehyde, 5-chloro-2-methyl-4-isothiazoline-3-oxy, 2-methyl-4-isothiazoline-3-oxy and sodium pyridine thiol-1-oxide and mixtures thereof as disinfectant in a quantity of 5 to 50 parts by weight per 100 parts by weight of the total quantity of alkyl benzenesulfonate, alkanol phosphate and alkanecarboxylic acids.

10. A process for the production of the clearly water-soluble, soapless lubricant preparations claimed in claims 1 to 8, characterized in that the quantity of water and the quantity of solubilizer and/or solvent present, if any, is regulated in such a way that the lubricant preparation has a viscosity of less than 300 mPa · s.

11. The use of the clearly water-soluble, soapless lubricant preparations claimed in claims 1 to 9 in the form of a 0.2 to 1% by weight aqueous solution as lubricants for conveyor installations.

12. The use claimed in claim 11 in the form of a 0.5% by weight aqueous solution.

13. The use claimed in claim 11 or 12 as a lubricant in conveyor installations for glass bottles and/or polyethylene terephthalate bottles.

## Revendications

1. Préparation aqueuse de lubrifiant exempte de savon, soluble dans l'eau pour y former des solutions limpides, avec un pH dans le domaine de 6 à 8, contenant :

(a) des alkylbenzènesulfonates ayant une longueur de chaîne de 10 à 18 atomes de carbone dans le radical alkyle, sous forme de sels de métaux alcalins, de sels d'ammonium et de sels d'alcanolamine contenant de 1 à 14 atomes de carbone dans le radical alcanolamine ;

(b) des alcanolphosphates alcoxylés répondant à la formule générale (I)

$$R^1-O-(-CH_2-\underset{\displaystyle R^2}{CH}-O)_n-PO_3X_2 \qquad (I)$$

dans laquelle

- $R^1$ représente un radical alkyle à chaîne droite et/ou ramifiée, saturé ou à insaturation unique et/ou multiple, contenant de 12 à 18 atomes de carbone,
- $R^2$ représente H ou $CH_3$,
- X représente un atome d'hydrogène et/ou un métal alcalin et
- n représente un nombre entier dans le domaine de 8 à 12 et

(c) des acides alcanecarboxyliques à chaîne droite et/ou ramifiée, saturée et/ou à insaturation unique et/ou multiple, contenant de 6 à 22 atomes de carbone, ainsi qu'un titre inférieur ou égal à 20°C, les alkylbenzènesulfonates et les alcanolphosphates étant présents dans un rapport pondéral de 3 : 1 à 1 : 3, les acides alcanecarboxyliques étant présents, par rapport à la somme de l'alkylbenzènesulfonate et de l'alcanolphosphate, dans un rapport pondéral de 1 : 20 à 1 : 4, éventuellement en plus d'agents de solubilisation, de solvants, d'agents anti-mousse et/ou d'agents de désinfection habituels.

2. Préparation de lubrifiant selon la revendication 1, **caractérisée en ce qu'**on choisit les alkylbenzènesulfonates parmi le décylbenzènesulfonate et/ou le dodécylbenzènesulfonate.

3. Préparation de lubrifiant selon la revendication 1, **caractérisée en ce que** le radical $R^1$ de la formule générale (I) représente le radical alkyle d'alcools gras naturels et ou synthétiques choisis parmi le dodécanol, le tridécanol, le tétradécanol, le pentadécanol, l'hexadécanol, l'heptadécanol, l'octadécanol, le 2-butyloctanol, le 2-pentylnonanol, le 2-hexyldécanol, le 2-heptylundécanol, le 9c-octadécén-1-ol et/ou le 9c,12c-octadécadién-1-ol.

4. Préparation de lubrifiant selon la revendication 1, **caractérisée en ce que,** dans la formule générale (I), le radical X représente un atome de potassium et/ou un atome de sodium.

5. Préparation de lubrifiant selon la revendication 1, **caractérisé en ce qu'**on choisit les acides alcanecarboxyliques parmi des acides carboxyliques naturels et/ou synthétiques que l'on choisit parmi l'acide caproïque, l'acide heptanoïque, l'acide octanoïque, l'acide nonanoïque, l'acide 9c-heptadécénoïque, l'acide 9c,12c-octadécadiénoïque, l'acide 9c,12c,15c-octadécatriénoïque, l'acide 5,8,11,14-éicosatétraénoïque, l'acide 4,8,12,15,19-docosapentaénoïque, l'acide gras d'huile de sperme, l'acide gras d'huile de coco, l'acide gras d'huile de tournesol, l'acide gras d'huile de lin et/ou l'acide gras d'huile de navette.

6. Préparation de lubrifiant selon les revendications 1 à 5, **caractérisée en ce qu'**elle contient des alkylbenzènesulfonates dans des quantités de 0,02 à 15% en poids, de préférence de 6 à 12% en poids, des alcanolphosphates alcoxylés répondant à la formule générale (I) dans des quantités de 0,02 à 15% en poids, de préférence de 5 à 10% en poids, et des acides alcanecarboxyliques dans des quantités de 0,01 à 10% en poids, de préférence de 1 à 5% en poids, chaque fois rapportées sur la composition totale.

7. Préparation de lubrifiant selon les revendications 1 à 10, **caractérisée en ce qu'**elle contient un ou plusieurs solvants ou agents solubilisants solubles dans l'eau ou miscibles à l'eau, que l'on choisit parmi l'urée, l'éthanol, le n-propanol, le i-propanol, le n-butanol, l'éthylèneglycol et/ou le butyldiglycol, en une quantité de 50 à 100 parties en poids, rapportée sur 100 parties en poids de la quantité totale en alkylbenzènesulfonate, alcanolphosphate et acide alcanecarboxylique.

8. Préparation de lubrifiant selon les revendications 1 à 7, **caractérisée en ce qu'**elle contient, comme agent anti-mousse, du triisobutylphosphate en une quantité de 5 à 25 parties en poids, rapportée sur 100 parties en poids de la quantité totale en alkylbenzènesulfonate, alcanolphosphate et acide alcanecarboxylique.

9. Préparation de lubrifiant selon les revendications 1 à 8, **caractérisée en ce que,** comme agent de désinfection, elle contient le glutaraldéhyde, la 3-oxy-5-chloro-2-méthyl-4-isothiazoline, la 3-oxy-2-méthyl-4-isothiazoline et le 1-oxyde de pyridine-thiol sodique, ainsi que leurs mélanges dans des quantités de 5 à 50 parties en poids, rapportées sur 100 parties en poids de la quantité totale en alkylbenzènesulfonate, alcanolphosphate et acides alcane-carboxyliques.

10. Procédé destiné à obtenir des préparations de lubrifiants exemptes de savons, solubles dans l'eau pour y former des solutions limpides selon les revendications 1 à 8, **caractérisé en ce qu'**on règle la quantité d'eau et la quantité éventuellement présente de solubilisant et/ou de solvant, de façon à obtenir une viscosité de la préparation de lubrifiant inférieure à 300 mPa · s.

11. Utilisation de préparations de lubrifiants exemptes de savon et solubles dans l'eau pour y former des solutions limpides, selon les revendications 1 à 9, sous forme d'une solution aqueuse à raison de 0,2 à 1% en poids, comme agents lubrifiants destinés à des installations de transport.

12. Utilisation selon la revendication 11 sous forme d'une solution aqueuse à 0,5% en poids.

13. Utilisation selon la revendication 11 ou 12, comme agent lubrifiant pour des installations de transport de bouteilles en verre et/ou de bouteilles en polyéthylènetéréphtalate.